Europäisches Patentamt

European Patent Office

Office européen des brevets

(11) Publication number: 0 178 613

A2

## EUROPEAN PATENT APPLICATION

(21) Application number: 85112980.9

(22) Date of filing: 12.10.85

(51) Int. Cl.⁴: **B60C 23/02**

(30) Priority: 15.10.84 ES 536749

(43) Date of publication of application:
23.04.86 Bulletin 86/17

(84) Designated Contracting States:
AT BE CH DE FR GB IT LI LU NL SE

(71) Applicant: Nieto Luelmo, Antonino Manuel
Sesena 22
E-28024 Madrid(ES)

(72) Inventor: Nieto Luelmo, Antonino Manuel
Sesena 22
E-28024 Madrid(ES)

(74) Representative: Bettello, Luigi
Studio Tecnico Dott. Ing. LUIGI BETTELLO Via Col
d'Echele, 25
I-36100 Vicenza(IT)

(54) **Permanent control system of the pneumatic pressure in the wheels of any automobile vehicle, aircraft or trailer.**

(57) The system acts according to the pressure, by deactivating or activating the signal transmitter, installed in each of the tyres and provided with an autonomous power supply, transmitting electromagnetic waves, or infrared rays, or ultraviolet rays or ultrasound, or alternating electrical fields with coding and which once activated by the sensor, transmits a continous signal visual and audible simultaneously. A receiver, receives the signals and transfers them to a synoptic table, which acknowledges the signal received visually and audibly.

EP 0 178 613 A2

**"PERMANENT CONTROL SYSTEM OF THE PNEUMATIC PRESSURE IN THE WHEELS OF ANY AUTOMOBILE VEHICLE, AIRCRAFT AND TRAILER".**

This Patent consists of two sections, with the electronic, mechanical and electrical components suitably required for the correct operation of the assembly.

The first section consists of two modules: one the pneumatic pressure sensor, to be fitted inside the tyre of each of the wheels of the vehicle concerned, and the second an electronic transmitter of the sensor pulses.

The pneumatic pressure sensor, of adequate sensitivity and regulated at the normal pressure of each type of tyre, on the wheel of the vehicle concerned, whether automobile, aircraft or trailer.

The transmitter, with autonomous power supply, at the time that the normal tyre pressure drops for any reason, this transmitter receives a continuous signal from the sensor, becomes activated and transmits waves which may be: electromagnetic, or alternating electrical fields with coding, infra-red, or ultraviolet rays and coded ultrasound.

The schematic diagram attached to this description indicates the components making it up.

The second section: this consists of three modules, which are:

1. The receiver, which, supplied by the battery of the vehicle itself and tuned to the various frequencies of the transmitters, receiving and recording the signals transmitted by the latter, in electromagnetic waves or other signals as stated above.

2. The remote controller, directing the signals recorded by the receiver module to the point on the indication board (synoptic table), corresponding to the sensor - transmitter of the wheel concerned. This remote control forms part of the receiver.

3. And the indicator, or synoptic table, which installed on the front of the receiver apparatus, and visible to the driver or pilot, is manifested visually, audibly, instrumentally or any combination of these methods.

The schematic diagram attached to this description indicates the receiver, remote controller and indicator or synoptic table components.

The novelty of this Patent seems to us to be clear, as the utilisation, of which it is the object, is neither known nor exists in the market of automobile vehicles, aircraft or trailers.

. The practical utility of this Patent is also as clear as it is obvious, as it is well known that the lack of normal pressure in wheels always produces the deterioration of the covering and in most cases, the destruction of this and the inner tube, and at times of the rim itself.

It is well known that thousands of wheels are lost, especially in heavy vehicles. This represents a considerable money loss and also, for this reason, the goods and passengers carried are endangered, and when this accident occurs, it is unfortunately fatal.

The advantages of the utilisation of this Patent in automobile vehicles, both light and heavy, aircraft and trailers, are so many and so important that by its implementation, the possibility of the damages mentioned is prevented and avoided, as well as the risks of serious accidents, which is well known to all users and hauliers, very serious when it is passenger transport, and always serious when it is goods transport.

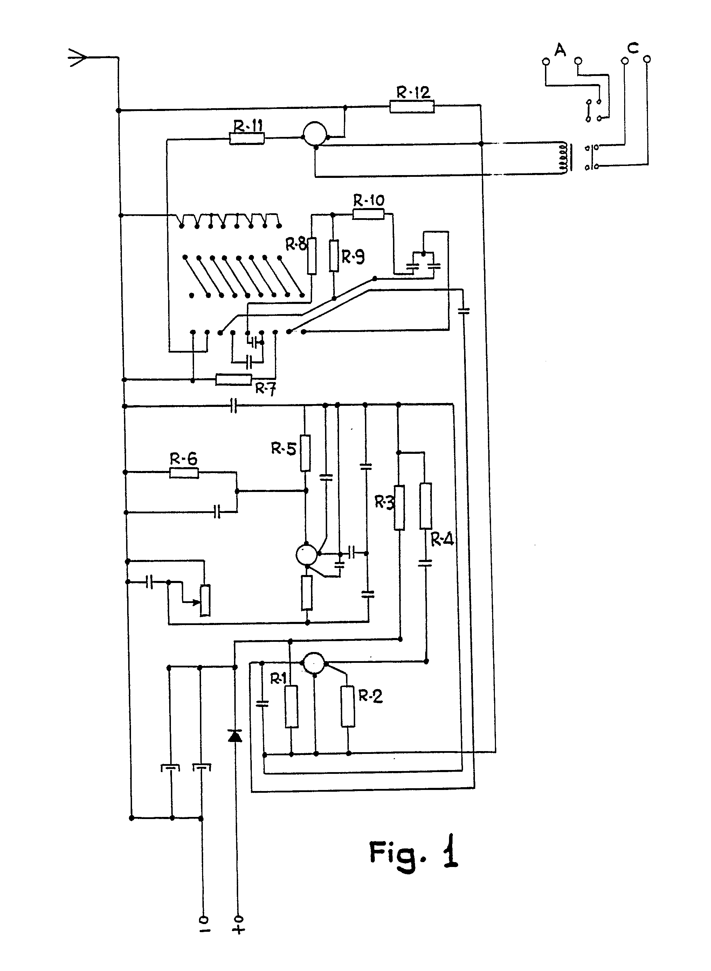

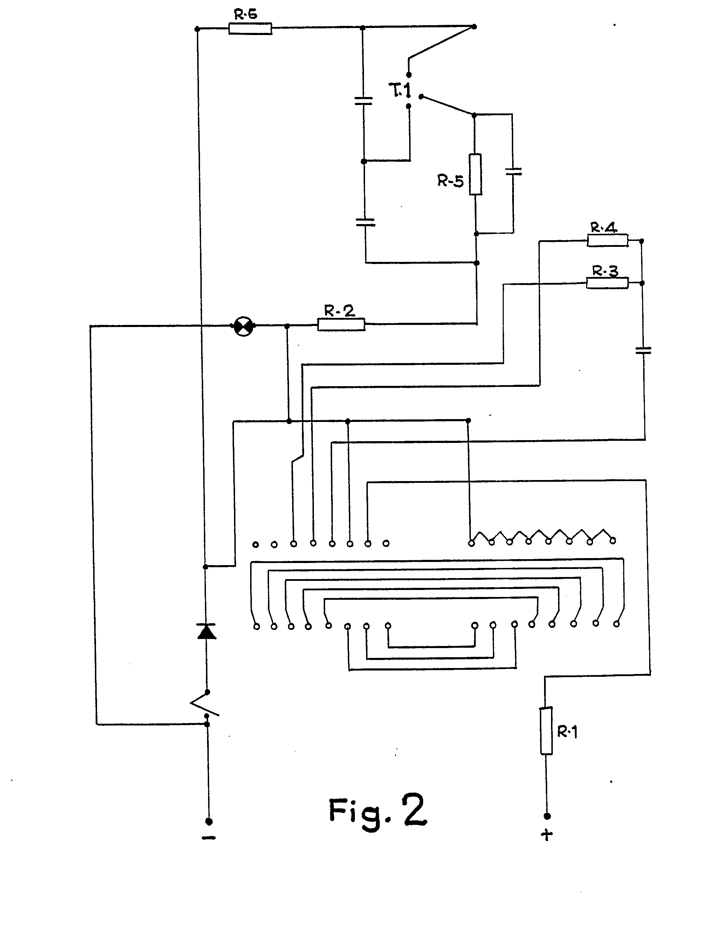

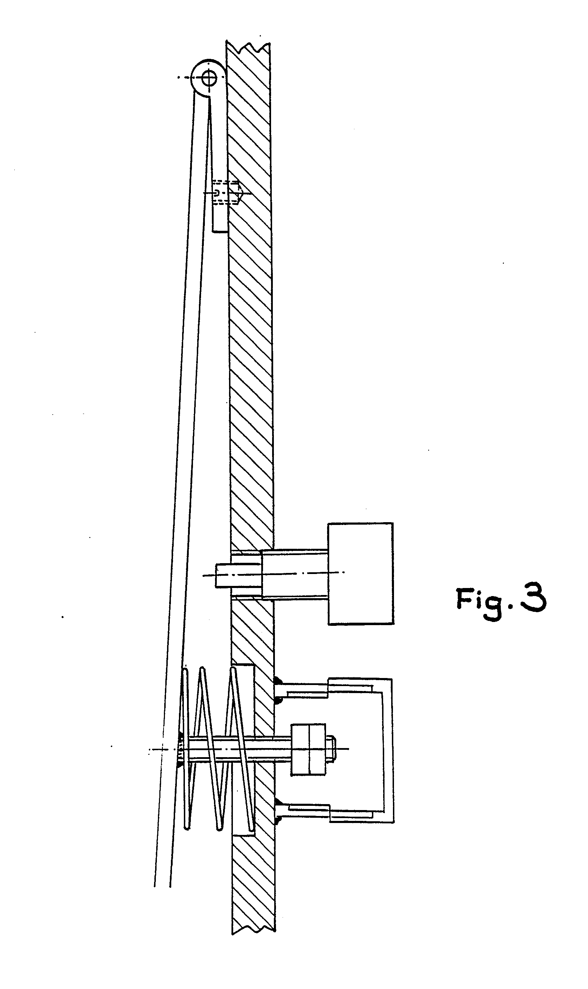

**Claims**

1. Permanent control system of the pneumatic pressure of the wheels of any automobile vehicle, aircraft or trailer, comprising: a sensor, specifically designed and graduated to the normal pressure of the wheel concerned, which acts according to the pressure, de-activating or activating the signal transmitter, installed in each of the tyres. A transmitter, fitted in each tyre, and provided with an autonomous power supply, transmitting electromagnetic waves, or infrared rays, or ultraviolet rays or ultrasound, or alternating electrical fields with coding and which once activated by the sensor, transmits a continuous signal. This signal is visual and audible simultaneously. A receiver, fed from the direct current of the vehicle battery, receives the signals from the transmitter, and transfers them, by remote control, to the synoptic table, which acknowledges the signal received visually and audibly.

Fig. 1

Fig. 2

0 178 613

Fig. 3